# FASCICULE DE BREVET EUROPEEN

(11) **EP 3 033 261 B1**
(45) Date de publication et mention de la délivrance du brevet: **31.05.2023**
(21) Numéro de dépôt: 14793215.6
(22) Date de dépôt: 19.09.2014
(51) Int. Cl.: B62B 3/14

(54) **CHARIOT HYBRIDE DE TRANSPORT DE MARCHANDISES OU D'ARTICLES DE MAGASINS**
HYBRID-EINKAUFSWAGEN
HYBRID SHOPPING CART

(30) Priorité: 19.09.2013 FR 1359044
(43) Date de publication de la demande: 22.06.2016
(73) Titulaire: Les Ateliers Réunis - Caddie, 67410 Drusenheim (FR)
(72) Inventeur: VISSAULT, Jean-Claude, F-42100 Saint Etienne (FR); FUNFROCK, Valentin, F-67240 Gries (FR); BECKRICH, Mathieu, F-67100 Strasbourg (FR); LELANDAIS, Nadia, F-67000 Strasbourg (FR)
(74) Mandataire: Ipsilon
(86) Numéro de dépôt international: PCT/FR2014/052332
(87) Numéro de publication internationale: WO 2015/040335

(56) Documents cités:
- EP-A2- 0 176 168
- WO-A1-2013/036964
- DE-A1- 3 324 659
- DE-A1- 19 824 368
- DE-B3-102006 043 523
- US-A- 5 255 930
- US-A1- 2002 175 482
- US-A1- 2008 111 328
- US-A1- 2009 160 146

## Description

L'invention concerne des chariots de transport de marchandises ou d'articles de magasins.

Dans les magasins tels que les supermarchés et hypermarchés, les clients sont habitués à faire leurs courses en utilisant des chariots. Ces chariots qui sont soit métalliques en treillis soudé soit en matière plastique comprennent une corbeille dans laquelle le client dépose les marchandises et articles qu'il choisit et un socle muni de roulettes et sur lequel est fixée la corbeille.

Les chariots métalliques sont généralement assez lourds et donc s'avèrent parfois difficiles à manier, notamment lorsqu'ils sont remplis d'articles. De plus, ils ont le désavantage d'offrir à l'utilisateur un contact froid au toucher.

Par ailleurs, les coûts de production des chariots métalliques sont relativement élevés.

Les chariots dont la corbeille est entièrement en plastique présentent, quant à eux, certains inconvénients tels que la rétention d'aliments (ex : feuilles de salade...) sur le fond en plastique et, avec le temps, la dégradation (au moins visuelle) du fond au contact des aliments.

La présente invention vise à remédier aux inconvénients de l'art antérieur en proposant un chariot conforme à la revendication 1.

La réalisation d'une corbeille de chariot à la fois en métal (pour le fond) et en plastique (pour la paroi avant et les parois latérales) allège la structure globale du chariot et le rend donc plus maniable qu'un chariot entièrement métallique.

Le fond en treillis métallique supprime toute zone de rétention d'aliments (hygiène amélioré) et conserve un aspect propre. Il réduit les coûts de nettoyage à long terme dans la mesure où il se nettoie plus facilement qu'un fond en plastique. Il assure en outre une fonction de rigidification de la corbeille et apporte une résistance adaptée au chargement de la corbeille (chargement conventionnel du chariot).

Par ailleurs, l'assemblage/montage des parois entre elles et avec le fond de la corbeille est conçu de manière à pouvoir assurer facilement le démontage, par exemple pour des raisons de maintenance ou de transport dans l'éventualité d'un assemblage délocalisé par rapport au lieu de fabrication des éléments constitutifs du chariot.

Selon d'autres caractéristiques prises isolément ou en combinaison l'une avec l'autre :
- la paroi avant est bombée vers l'extérieur assurant ainsi la fonction de pare-choc ;
- la paroi avant possède une double courbure, c'est-à-dire une courbure horizontale et une courbure verticale ; les deux courbures s'étendent dans une direction transversale par rapport à la direction longitudinale du chariot (direction dans laquelle le chariot se déplace et selon laquelle les parois latérales s'étendent) ; la paroi avant est généralement orientée de manière à ce que la zone proéminente de la paroi avant qui reçoit les chocs frontaux soit sensiblement au centre de ladite paroi, répartissant ainsi sur la paroi, les efforts appliqués en cas de choc ;
- les deux parois latérales et la paroi avant comportent chacune à leur partie inférieure un bord libre périphérique en forme de U inversé orienté vers le bas, ledit bord libre venant coiffer le bord libre périphérique du fond en treillis métallique replié vers le haut ;
- le bord libre périphérique inférieur en forme de U inversé de la paroi avant définit un espace interne qui procure à la paroi avant une fonction amortisseur de choc ; le creux ainsi formé est apte à absorber des chocs en partie basse de la paroi avant ;
- le chariot comporte des moyens de fixation des parois au fond en treillis métallique, lesdits moyens de fixation étant agencés dans l'espace interne défini par la forme en U inversé du bord inférieur des parois ;
- les moyens de fixation comprennent :
   - des brides fixées au bord libre périphérique du fond en treillis replié vers le haut,
   - des vis traversant respectivement lesdites brides avant d'être fixées dans les parois, permettant ainsi d'ajuster l'effort de serrage des parois en matière plastique sur le fond en treillis métallique ;
- les deux parois latérales sont fixées chacune à la paroi avant par emboitement (par exemple de partie(s) mâle(s) dans une ou des parties femelles) ;
- la paroi avant présente sur chacun de ses deux côtés opposés un retour vers l'arrière du chariot, chaque retour étant aligné avec la paroi latérale correspondante ;
- au moins une des parois latérales et avant présente dans son bord supérieur une ouverture qui fait office de poignée pour un utilisateur du chariot ;
- la corbeille présente, suivant une vue de côté du chariot, un profil général effilé d'arrière en avant selon lequel, d'une part, le bord inférieur des parois latérales à l'arrière du chariot est situé à une altitude inférieure à celle du bord inférieur de la paroi avant et, d'autre part, le bord supérieur des parois latérales à l'arrière du chariot est situé à une altitude supérieure à celle du bord supérieur de la paroi avant ;
- la paroi avant est réalisée dans une matière plastique différente de celle des deux parois latérales ;
- la matière plastique dans laquelle est réalisée la paroi avant contient au moins un élastomère permettant à ladite paroi avant d'assurer la fonction de pare-choc élastique ; il s'agit par exemple d'un copolymère à haute résistance aux chocs ;
- les parois latérales sont rigidifiées chacune au moins à leur bord supérieur par un longeron supérieur et sur leur bandeau arrière par un longeron vertical, chacun de ces longerons comportant au moins une veine réalisée lors de l'injection avec du gaz.
- la matière plastique des parois latérales comporte une charge minérale et/ou organique et, par exemple, est chargée en fibres de verre, en billes de verre ou en talc ;
- une ouverture servant de poignée pour l'utilisateur est pratiquée dans chaque longeron supérieur ; de préférence l'ouverture est positionnée vers l'avant du chariot pour faciliter l'orientation manuelle du chariot ;
- le chariot comporte une poignée utilisateur qui est reliée aux deux parois latérales, dans leur portion arrière qui est opposée à leur portion avant fixée à la paroi avant, par l'intermédiaire de deux pièces ( entretoises) fixées chacune de manière démontable respectivement aux portions arrières des deux parois latérales, les deux pièces étant adaptées à un type de poignée utilisateur prédéterminé ;
- le chariot est conçu pour que le volume ( litrage) de la corbeille puisse être modifié par passage d'un premier volume à un second volume en remplaçant le fond et la paroi avant de la corbeille adaptés au premier volume par un fond et une paroi avant adaptés au second volume de corbeille, les parois latérales restant les mêmes ;
- les parois latérales et la paroi avant comprennent chacune une zone périphérique formée par des longerons et une zone centrale ajourée formée par des barreaux entrecroisés, la zone centrale comprenant plusieurs sous-zones qui sont réparties en deux types, dans un premier type de sous-zones les barreaux étant moins espacés les uns des autres que dans un deuxième type de sous-zones afin de conférer une plus grande rigidité tout en offrant de l'extérieur de la corbeille une visibilité à travers la paroi, dans le deuxième type de sous-zones les barreaux étant plus espacés les uns des autres afin d'offrir une plus grande visibilité à travers la paroi ;
- les parois latérales et la paroi avant comportent chacune des longerons dont la face externe est grainée de manière à diminuer l'impact visuel d'éventuelles rayures sur ladite face externe.

D'autres caractéristiques et avantages apparaitront au cours de la description qui va suivre, donnée uniquement à titre d'exemple non limitatif et faite en référence aux dessins annexés, sur lesquels :
- la figure 1 est une vue schématique en perspective avant d'un chariot selon un mode de réalisation de l'invention ;
- la figure 2 est une vue schématique de côté du chariot de la figure 1 ;
- la figure 3 est une vue schématique partielle en section longitudinale montrant l'assemblage d'une paroi du chariot des figures 1 et 2 sur le fond de la corbeille du chariot ;
- la figure 4 est une vue schématique partielle de dessous du fond de la corbeille et des parois ;
- les figures 5a, 5b, 5c sont des vues schématiques partielles montrant l'assemblage d'une paroi latérale et de la paroi avant du chariot des figures 1 et 2 ;
- la figure 6 est une vue schématique éclatée et agrandie de la partie arrière du chariot.

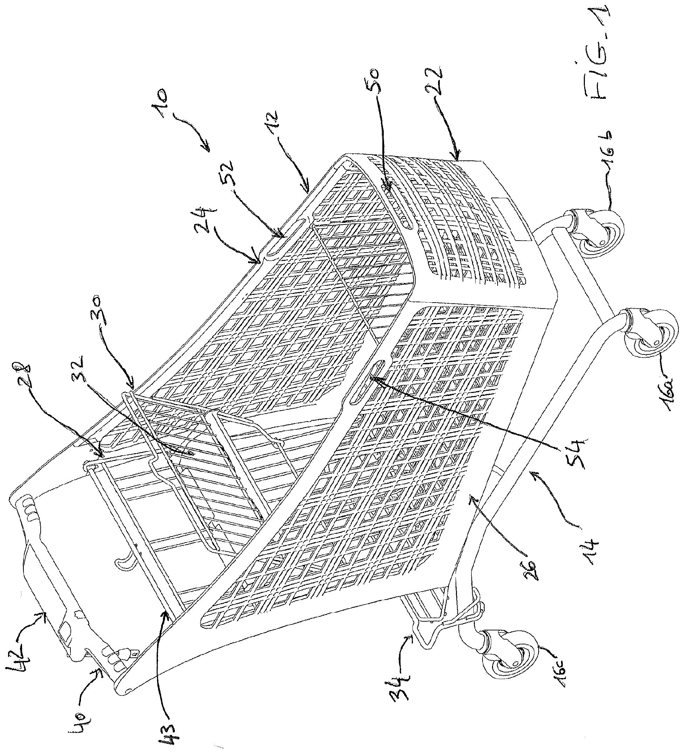

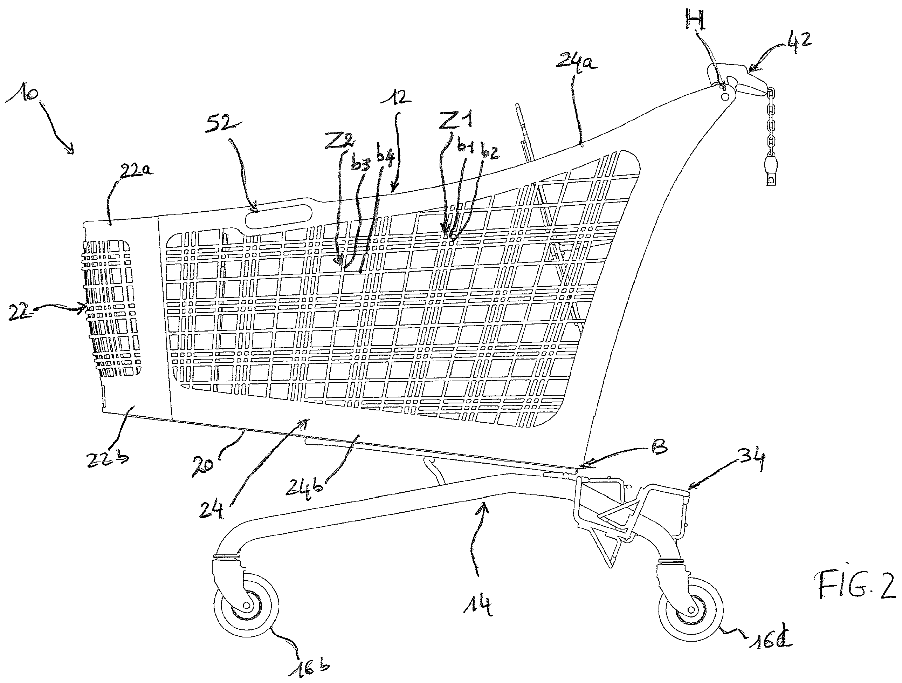

Comme représenté à la figure 1 et désigné par la référence générale notée 10, un chariot de magasin (ex : magasin de la grande distribution de type supermarché ou hypermarché) selon un mode de réalisation de l'invention est destiné au transport de marchandises ou d'articles commerciaux. Ce chariot 10 comprend de façon générale :
- une corbeille 12 qui délimite un volume interne destiné à recevoir des marchandises ou articles afin de les transporter,
- un socle ou embase 14 qui est équipé de plusieurs roulettes (par exemple deux roulettes avant 16a-b et deux roulettes arrière 16c-d visibles sur les figures 1 et 2) et sur lequel est montée de manière fixe et conventionnelle la corbeille 12.

Le socle 14 est par exemple une structure formée par l'assemblage de façon conventionnelle de tubes et de fils métalliques (ex : en acier revêtu) auxquels sont fixées les roulettes.

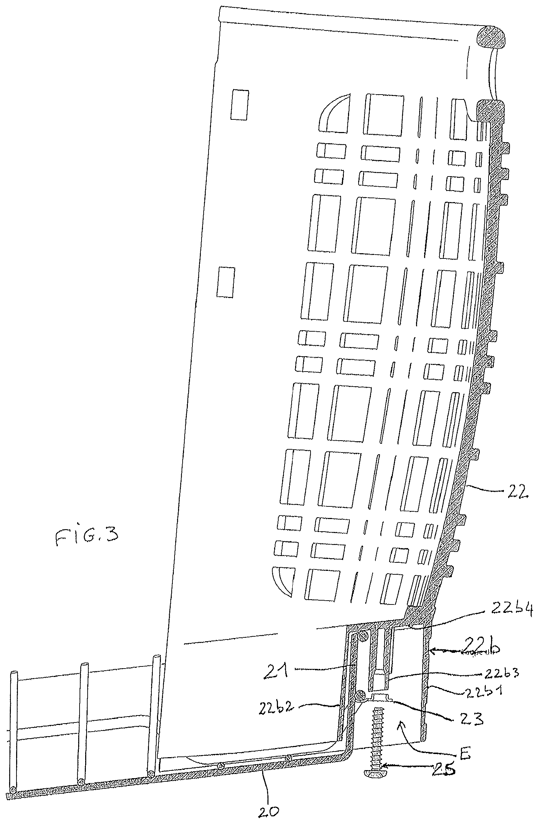

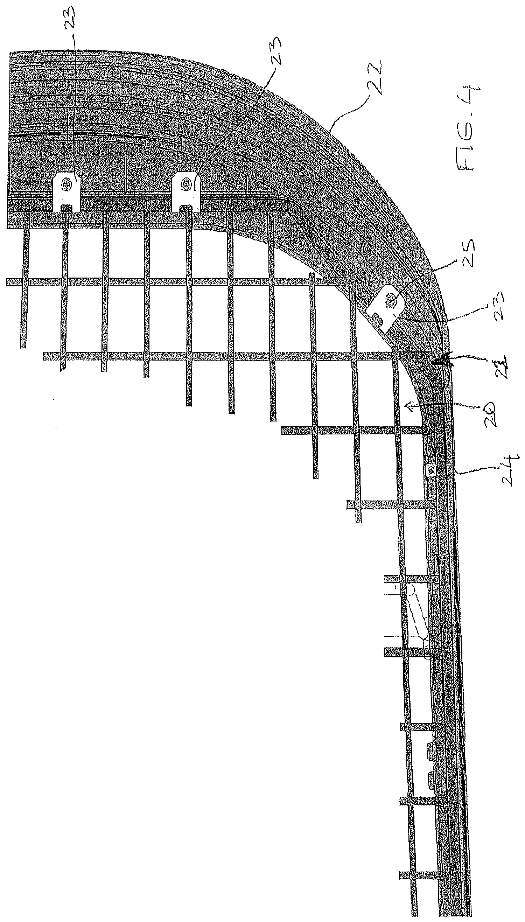

La corbeille 12 est formée de plusieurs parties :
- un fond métallique 20 (figures 3 et 4) qui est réalisé en treillis métallique (ex : en acier revêtu), d'une manière conventionnelle pour ce qui est de l'assemblage entre eux des fils métalliques formant le treillis (ex : soudage par résistance des fils entre eux) ; le fond 20 comprend un bord périphérique qui est replié à angle droit vers le haut, comme illustré sur la figure 3, aux fins d'assemblage avec le bord inférieur des parois de la corbeille ;
- trois parois réalisées en matière plastique (par exemple, en utilisant un procédé de fabrication de moulage par injection) et qui sont une paroi avant 22 et deux parois latérales 24, 26 en vis-à-vis assemblées avec la paroi avant.

Comme illustré sur la figure 1, la corbeille 12 est délimitée à l'arrière du chariot, de façon conventionnelle, par un volet arrière 28 pivotant, par sa partie supérieure, vers l'intérieur de la corbeille lorsque l'avant d'un autre chariot vient appuyer contre ce volet pour s'encastrer à l'intérieur du présent chariot 10 (stockage des chariots en file).

Sur ce volet arrière pivotant 28 sont fixés de manière conventionnelle un deuxième volet « enfant » pivotant 30 et une assise 32 formant notamment siège enfant et qui se déploie à l'horizontale lorsque le deuxième volet « enfant » pivote, depuis sa position de rangement verticale (contre le premier volet arrière 28), vers l'intérieur de la corbeille (figure 1).

La corbeille 12 est fixée au socle 14 (par exemple par soudage des fils du fond 20 sur les tubes du socle) de manière à ce que la partie avant de la corbeille forme une avancée par rapport au socle et laisse dégagée une partie à l'arrière du socle.

Cette partie arrière dégagée du socle est équipée d'une structure/armature en fils métalliques 34 qui forme une structure repliable ou dépliable facilement avec le pied ou un berceau d'accueil/de rangement pour entreposer des marchandises/articles tels que des packs de bouteilles de liquide (eau...). L'utilisateur (client) du chariot n'a donc pas besoin de soulever ces marchandises/articles (généralement parmi les plus lourds) sur une grande hauteur pour les entreposer à l'intérieur de la corbeille.

Les deux parois latérales 24, 26 s'étendent de l'arrière du chariot, là où est disposé le volet arrière pivotant 28 et la poignée utilisateur 40 équipée du consigneur (monnayeur) 42, vers l'avant du chariot en conférant au chariot (suivant la vue de côté de la figure 2) une forme effilée (profilée vers l'avant). La hauteur des parois (et donc de la corbeille) à l'arrière du chariot diminue au fur et à mesure que l'on avance vers la paroi avant du chariot.

Plus particulièrement, le bord libre supérieur des parois latérales 24, 26 (ex : 24a de la paroi 24 sur la figure 2) s'étend depuis l'arrière du chariot (point haut H) en descendant vers l'avant du chariot et en s'incurvant (concavité tournée vers le haut) jusqu'à atteindre la paroi avant 22. Le bord libre supérieur 22a de la paroi avant 22 est lui aussi en pente jusqu'à la face avant de la paroi dans sa partie formant un retour dans l'alignement de chaque paroi latérale.

Le bord libre inférieur des parois latérales 24, 26 (ex : bord 24b de la paroi 24 sur la figure 2) s'étend depuis l'arrière du chariot (point bas B) en remontant de façon rectiligne vers l'avant du chariot jusqu'à atteindre la paroi avant 22. Le bord libre inférieur de la paroi avant 22 (dans sa partie formant retour) est lui aussi en pente ascendante jusqu'à la face avant de cette paroi.

Le profil supérieur de la corbeille forme ainsi une « ligne générale plongeante » qui facilite l'accessibilité par l'utilisateur au fond de la corbeille, notamment par l'avant du chariot, lors du déchargement de celle-ci. Le fond de la corbeille s'étend en pente ascendante de l'arrière vers l'avant pour faciliter l'emboitement des corbeilles entre elles.

Comme représenté à la figure 1, la poignée utilisateur 40 et la traverse porte volet 43 sur laquelle est articulé le volet 28 sont disposées transversalement entre les portions ou extrémités arrières respectives des deux parois latérales 24 et 26.

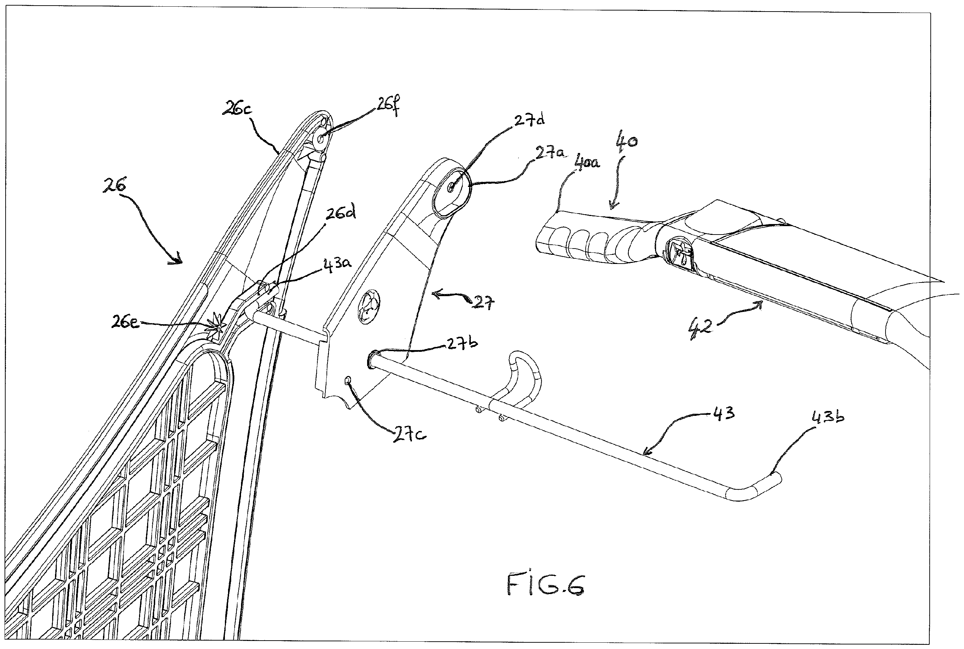

Plus particulièrement, comme représenté à la figure 6, la portion arrière 26c de la paroi latérale 26 (la description est identique pour la portion arrière de la paroi latérale opposée 24) est équipée d'une pièce intermédiaire 27 fixée de manière démontable sur la face interne de la portion arrière 26c.

La pièce 27 fait office d'entretoise de poignée.

La pièce 27 comporte à une extrémité une empreinte 27a dont la forme et les dimensions correspondent à celles de l'extrémité 40a de la poignée utilisateur 40.

Ainsi, chaque pièce est adaptée à coopérer avec un type ou modèle de poignée utilisateur 40.

La mise en place d'un type de poignée utilisateur sur un chariot selon le mode de réalisation de l'invention représenté nécessite donc la mise en place de deux pièces intermédiaires adaptées 27.

On notera que chaque pièce intermédiaire 27 est percée d'un trou traversant 27b pour permettre le passage de la traverse 43. La traverse 43 est repliée à ses deux extrémités opposées 43a, 43b et chaque extrémité repliée s'insère par emboitement en force dans un logement 26d prévu à cet effet sur la face interne de la portion arrière de la paroi latérale (ici la paroi 26).

La pièce 27 est fixée de manière démontable à la portion arrière 26c par des moyens de fixation conventionnels tels qu'une vis positionnée dans le trou 27c et qui coopère avec un filetage prévu dans l'élément étoilé 26e de la portion arrière 26c.

D'autres moyens de vissage sont prévus dans l'empreinte 27a (trou 27d) et dans la portion arrière 26c (filetage 26f) afin de solidariser, par la face externe de la portion arrière 26c, l'extrémité 40a de la poignée utilisateur 40 à la portion arrière 26c en emprisonnant la pièce 27 (la description est identique pour l'extrémité 40b avec la paroi 24).

Comme représenté sur les figures 1 à 4, la paroi avant 22 est doublement bombée (notamment sa face externe) vers l'extérieur du chariot. La double courbure convexe (courbure horizontale et verticale) de la paroi alliée aux caractéristiques absorbantes de la matière plastique permet, d'une part, de réduire la force d'impact lors d'un choc avec un véhicule situé sur la zone de parking du magasin ou avec un autre chariot (fonction de pare-choc) et, d'autre part, d'atténuer une éventuelle collision avec une personne heurtée de dos par le chariot 10.

Comme représenté sur les figures 2 et 3, la double courbure de la paroi avant présente la plus grande amplitude (ou profondeur du côté du creux) dans la zone centrale. La paroi avant est en outre très peu inclinée par rapport à la verticale si bien que c'est la zone centrale qui est proéminente en cas de chocs et qui reçoit donc les chocs et non le bandeau supérieur ou bord libre supérieur 22a. En cas de chocs les efforts sont ainsi mieux distribués sur toute la paroi avant à partir de la zone centrale de collision.

On va maintenant décrire l'assemblage des parois en plastique sur le fond en treillis métallique ainsi que l'assemblage des parois entre elles.

La figure 3 illustre suivant une section longitudinale (prise suivant l'axe longitudinal du chariot) le montage et la fixation de la paroi avant 22 sur le fond 20.

L'assemblage des deux parois latérales 24, 26 avec le fond 20 est identique dans le principe et ne sera pas décrit.

Comme mentionné précédemment, le fond 20 a un bord périphérique libre 21 qui est relevé (replié sensiblement à angle droit vers le haut) de manière à coopérer avec le bord inférieur libre 22b de la paroi avant 22 (et avec le bord inférieur libre des parois latérales 24 et 26).

Ce bord inférieur 22b s'étend vers le bas à partir de la partie centrale de la paroi sous la forme de deux portions de parois 22b1, 22b2 parallèles entre elles et espacées de manière à délimiter un espace interne E (gorge) ouvert par le dessous.

Le bord inférieur 22b ainsi configuré s'étend sur toute la partie inférieure de la paroi avant et comporte des fûts de vissage 22b3 aménagés de façon saillante à l'intérieur de l'espace interne E et dont l'ouverture est orientée vers le bas. Chaque fût 22b3 s'étend à partir de la portion de paroi de fond 22b4 qui constitue la base d'un U inversé dont les portions de parois 22b1 et 22b2 constituent les branches.

Comme illustré sur la figure 3, l'espace interne ouvert E de la paroi avant 22 vient coiffer le bord libre relevé 21 du fond 20.

Le bord libre 21 comporte sur sa face tournée vers l'intérieur de l'espace E et, à l'aplomb de chacun des fûts 22b3, une bride 23 (on en dénombre trois sur la demi-vue de dessous de la figure 4 mais elles sont plus nombreuses car réparties le long du bord inférieur 22b de la paroi) fixée au treillis métallique du fond 20. La bride s'étend horizontalement en éloignement du bord 21 et présente, dans sa partie d'extension, un trou traversant situé dans l'alignement de l'ouverture du fût 22b3 correspondant.

La bride 23 est espacée en hauteur de chaque fût 22b3.

Une vis 25 destinée à s'engager dans chaque fût de vissage 22b3 est d'abord insérée dans le trou traversant de la bride 23 avant d'être engagée dans l'ouverture du fût correspondant et d'y être vissée.

En vissant plus ou moins la vis dans le fût, la présence de la bride à distance du fût et solidaire du fond de la corbeille permet de mettre plus ou moins en tension la bride et donc d'ajuster l'effort de serrage/fixation de la paroi avant 22 sur le fond 20. Ce montage procure un certain jeu dans la liaison entre la paroi 22 et le fond 20 et donc apporte une élasticité au niveau de cette liaison (confort de fixation et d'élasticité).

L'ensemble de la corbeille formé des parois en plastique ainsi assemblées sur le fond métallique permet de bouger sans être rigide (mécaniquement indéformable) et procure à l'utilisateur du chariot un confort de roulage et de manipulation.

Par ailleurs, ce montage des parois sur le fond permet de ne pas casser, ou en tout cas, de ne pas marquer la matière plastique.

Ce montage est dissimulé vis-à-vis de l'extérieur par la portion de paroi avant 22b1 formant jupe de protection.

L'ouverture vers le bas de l'espace interne E limite fortement les entrées de poussières et de salissures.

On notera que l'espace interne E existant permet d'absorber plus facilement les chocs en partie basse de la paroi avant 22 et apporte ainsi de la souplesse au nez du chariot en partie basse.

On notera que les moyens de fixation des parois latérales 24, 26 sur le fond (brides, vis) sont redimensionnés (taille réduite) par rapport à ceux de la paroi avant 22 sur le fond car les efforts subis par ces parois sont moindres.

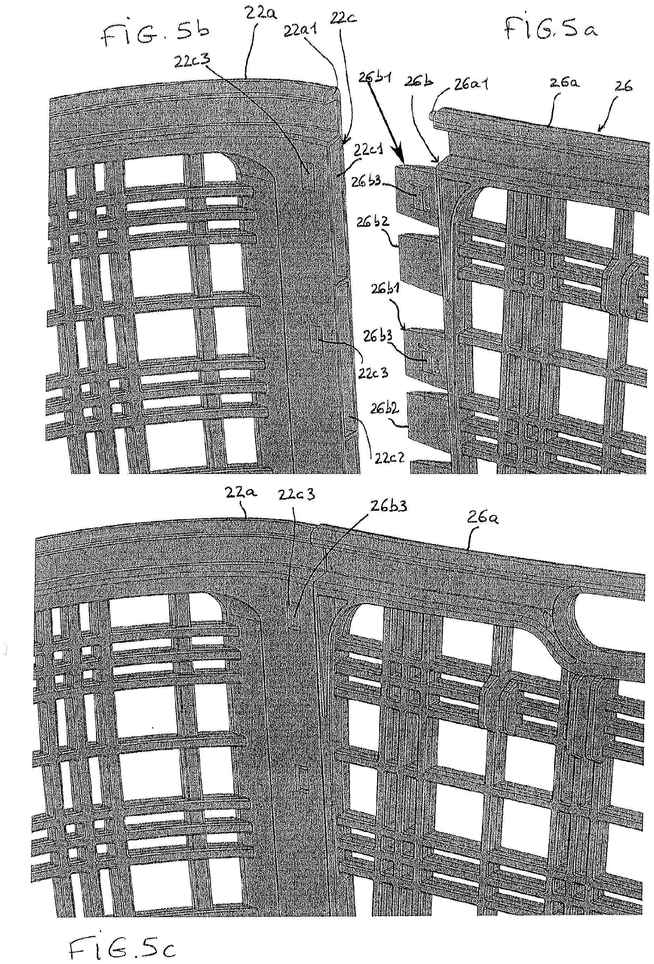

Les figures 5a-c illustrent le montage d'une paroi latérale 24, 26 avec la paroi avant 22.

La figure 5a est une vue schématique partielle de la paroi 26 avec son bord supérieur libre 26a et son bord vertical avant 26b.

Le bord 26a est muni d'un téton 26a1 et le bord vertical 26b est muni sur toute sa hauteur de moyens mâle d'emboitement en forme de dents plates 26b1 et 26b2 (drageoirs).

Les dents 26b1 sont d'un premier type comportant chacune une patte élastique 26b3 qui est munie d'un organe de retenue (ergot saillant).

Les dents 26b2 d'un deuxième type sont dépourvues de pattes.

La paroi avant 22 illustrée partiellement sur la figure 5b comporte un bord vertical arrière 22c qui est ouvert sur presque toute sa hauteur sur plusieurs cavités internes à la paroi 22c1, 22c2 disposées l'un au-dessus de l'autre (moyens d'emboîtement femelles).

La face interne de la paroi avant 22 présente, au niveau de chacun des deux retours arrières formés par la paroi (la figure 5b montre un seul de ces retours) et sur toute sa hauteur, des lumières 22c3 qui débouchent chacune latéralement à l'intérieur d'une cavité interne.

Les cavités internes 22c1, 22c2 sont destinées à recevoir par emboitement les dents 26b1 et 26b2 de la paroi latérale 26 (figure 5a) et les lumières 22c3 reçoivent les organes de retenue des pattes élastiques 26b3 afin de fixer et retenir l'un avec l'autre les deux parois par encliquetage.

Le bord supérieur 22a de la paroi avant 22 présente à son extrémité libre un évidement 22a1 destiné à accueillir le téton 26a1 de la paroi latérale 26 (figure 5a).

La figure 5c montre les deux panneaux 26 et 22 assemblés par emboitement et encliquetage comme expliqué ci-dessus. Les organes de retenue 26b3 des pattes élastiques apparaissent à travers les lumières 22c3.

On notera que l'assemblage des parois latérales avec la paroi avant et de ces parois en plastique (ex : polypropylène) sur le fond en treillis métallique de la corbeille tel qu'exposé ci-dessus est conçu pour faciliter à la fois les opérations de montage et de démontage.

Le changement de volume de la corbeille est effectué aisément par remplacement du fond 20 et de la paroi avant 22 par un fond et une paroi avant dont les dimensions transversales sont adaptées au nouveau volume. On transforme ainsi facilement un chariot d'un volume de 220 litres en un chariot d'un volume de 240 litres en conservant les mêmes parois latérales 24, 26.

Par ailleurs, ce système d'assemblage du chariot (montage des parois latérales et avant par emboîtement et fixation de manière démontable des parois latérales et avant sur le fond) permet de remplacer aisément une ou plusieurs parois (panneaux) lors d'opérations de maintenance sur le chariot. On évite ainsi d'avoir à remplacer l'intégralité de la corbeille. On réduit également les coûts de transport en ouvrant la possibilité de transporter le chariot sous la forme d'un kit d'assemblage et d'effectuer un assemblage délocalisé si besoin.

Les coûts d'investissement en outillages liés à la fabrication des pièces en plastique (parois avant et latérales) sont fortement réduits par rapport aux coûts d'investissement nécessités par la fabrication d'une corbeille en une seule pièce.

Le caractère hybride (métal-plastique) de la corbeille 12 du chariot permet de réduire le poids total du chariot (tout en procurant à la corbeille une certaine rigidité par son fond métallique 20). L'effort de poussée sur le chariot peut donc être réduit, ce qui le rend plus maniable (confort utilisateur).

En outre, des poignées 50, 52, 54 sont prévues dans le bord supérieur libre (longeron supérieur) de chaque paroi 22, 24, 26 grâce à des ouvertures pratiquées dans chaque bord et qui permettent le passage des doigts d'un utilisateur et facilitent ainsi la manipulation du chariot sur son pourtour pendant l'utilisation dudit chariot dans un magasin. Les poignées latérales 52, 54 et la poignée avant permettent de tracter et de guider plus facilement le chariot lorsqu'il est chargé (ergonomie améliorée). On notera qu'un nombre et des emplacements différents de poignées sont envisageables.

On notera que les poignées latérales sont plus particulièrement disposées à proximité de la paroi avant afin de faciliter l'orientation du chariot lorsqu'il est poussé au niveau de sa partie arrière (par la poignée utilisateur 40).

Les parois avant 22 et latérales 24, 26 sont des panneaux en matière plastique rigidifiés sur leur pourtour par un ensemble de longerons supérieurs (bords libres supérieurs), inférieurs (bords libres inférieurs) et verticaux.

Chaque longeron supérieur ou bord et chaque bandeau arrière sont eux-mêmes rigidifiés lors de la fabrication des parois par soufflage de veines de gaz lors de l'injection plastique (les longerons et bandeau arrière sont donc creux).Cette méthode de fabrication des parois par soufflage de veine de gaz pendant l'injection plastique confère aux parois une grande finesse contribuant à la légèreté du chariot tout en assurant une grand rigidité des parois.

Chaque paroi est par exemple réalisée dans une matière plastique chargée en fibres de verre, en billes de verre ou en talc (ou toute autre substance ou composé approprié), permettant également le soufflage de veines de gaz, ce qui confère à l'ensemble une meilleure planéité et rigidité ainsi qu'une résistance améliorée aux efforts de traction sur les poignées 50, 52, 54.

On notera que l'ensemble d'une paroi (latérale ou avant) est réalisé dans la même matière.

Tout le pourtour des panneaux latéraux et avant (longerons supérieurs, inférieurs et verticaux) possède une face externe présentant un aspect non lisse. Plus particulièrement, les faces externes sont grainées, par exemple chimiquement.

Cet aspect non lisse (rugueux) ou grainé permet, en cas de rayures occasionnées à la face externe, de diminuer l'impact visuel de telles rayures.

En effet, une rayure pratiquée sur une face lisse est davantage visible et, de ce fait, nuit davantage à l'aspect esthétique du chariot.

Comme représenté sur les figures 1 et 2, les bords/longerons entourent la partie centrale des parois/panneaux qui est formée de motifs ajourés. Les motifs sont formés par le croisement horizontal-vertical de barreaux ou nervures pleins : une nervure centrale encadrée par deux groupes de trois nervures plus rapprochées et qui définissent une maille suffisamment ouverte pour pouvoir voir l'intérieur de la corbeille, essentiellement sur les parois latérales (sécurité/vol).

Plus particulièrement, comme représenté sur la figure 2, chaque paroi comprend une zone périphérique formée par les longerons horizontaux et verticaux (pourtour ou cadre) et une zone centrale ajourée formée par les barreaux ou nervures entrecroisés de manière à former une maillage qui assure un compromis entre tenue mécanique et visibilité.

La zone centrale comprend ainsi plusieurs sous-zones réparties suivant deux types :
- dans un premier type de sous-zone Z1 les barreaux b1, b2 sont peu espacés les uns des autres (motif de petits carrés) afin de conférer une rigidité mécanique locale donnée, mais leur espacement permet néanmoins de voir à travers ;
- dans un deuxième type de sous-zone Z2 les barreaux b3, b4 sont plus espacés (motifs de grands carrés) que dans le premier type de sous-zone Z1, ce qui procure une plus grande visibilité localement à travers la paroi mais une moins grande rigidité.

La maille a par exemple une taille de 35 x 45 mm et est entourée d'une nervure d'épaisseur de 6 à 7 mm.

On notera que les retours latéraux de la paroi avant 22 (vers l'arrière du chariot par rapport à la face externe avant bombée) sont disposés dans l'alignement des bords verticaux libres des deux parois latérales 24, 26, ce qui leur permet de s'assembler parfaitement l'une avec l'autre (jonction dans un même plan).

Cet agencement permet d'utiliser les mêmes panneaux latéraux 24, 26 pour réaliser des corbeilles de différents volumes, en réduisant ou en augmentant la longueur des retours du panneau avant 22.

Avantageusement, la paroi avant 22, d'une part, et les deux parois latérales 24, 26, d'autre part, peuvent être réalisées dans des matières plastiques différentes qui sont adaptées aux différentes fonctions remplies par ces parois.

Plus particulièrement, la paroi avant 22 assurant une fonction de pare-choc élastique est réalisée dans une matière plastique contenant un ou des élastomères adaptés. Par exemple, la matière plastique utilisée est un copolymère à haute résistance aux chocs. Les parois latérales 24, 26 procurent au chariot une rigidité suffisante pour assurer une bonne tenue aux charges supportées par la corbeille, aux chocs latéraux et un confort amélioré dans la conduite du chariot.

On notera que la conception du chariot selon l'invention tel que décrit dans les modes de réalisation et variantes ci-dessus lui permet de respecter les normes de conception EN et notamment la norme EN 1929.

## Revendications

1. Chariot (10) comprenant :
- une corbeille (12) destinée à recevoir des marchandises et qui comprend un fond (20), deux parois latérales (24, 26) en vis-à-vis et une paroi avant (22),
- un socle (14) sur lequel est montée la corbeille, ledit socle étant équipé de roulettes (16a-d) pour le déplacement du chariot,
**caractérisé en ce que** le fond (20) de la corbeille est réalisé en treillis métallique et que les deux parois latérales (24, 26) et la paroi avant (22) sont en matière plastique, les parois latérales (24, 26) étant configurées pour être assemblées de manière amovible à la paroi avant (22) et pour former un ensemble fixé de manière amovible sur le fond (20) de la corbeille (12).

2. Chariot selon la revendication 1, **caractérisé en ce que** la paroi avant (22) est bombée vers l'extérieur assurant ainsi la fonction de pare-choc.

3. Chariot selon la revendication 2, **caractérisé en ce que** la paroi avant (22) possède une double courbure, c'est-à-dire une courbure horizontale et une courbure verticale.

4. Chariot selon l'une des revendications 1 à 3, **caractérisé en ce que** les deux parois latérales (24, 26) et la paroi avant (22) comportent chacune à leur partie inférieure un bord libre périphérique (22b) en forme de U inversé orienté vers le bas, ledit bord libre venant coiffer le bord libre périphérique (21) du fond en treillis métallique replié vers le haut.

5. Chariot selon la revendication 4, **caractérisé en ce que** le bord libre périphérique inférieur en forme de U inversé de la paroi avant (22) définit un espace interne (E) qui procure à la paroi avant une fonction amortisseur de choc.

6. Chariot selon la revendication 4 ou 5, **caractérisé en ce qu'**il comporte des moyens de fixation des parois (22, 24, 26) au fond en treillis métallique (20), lesdits moyens de fixation étant agencés dans l'espace interne (E) défini par la forme en U inversé du bord inférieur des parois.

7. Chariot selon la revendication 6, **caractérisé en ce que** les moyens de fixation comprennent :
- des brides (23) fixées au bord libre périphérique (21) du fond en treillis replié vers le haut,
- des vis (25) traversant respectivement lesdites brides avant d'être fixées dans les parois, permettant ainsi d'ajuster l'effort de serrage des parois en matière plastique sur le fond en treillis métallique.

8. Chariot selon l'une des revendications 1 à 7, **caractérisé en ce que** les deux parois latérales (24,26) sont fixées chacune à la paroi avant (22) par emboitement.

9. Chariot selon l'une des revendications 1 à 8, **caractérisé en ce que** la paroi avant (22) présente sur chacun de ses deux côtés opposés un retour vers l'arrière du chariot, chaque retour étant aligné avec la paroi latérale correspondante.

10. Chariot selon l'une des revendications 1 à 9, **caractérisé en ce qu'**au moins une des parois latérales et avant présente dans son bord supérieur une ouverture (50, 52, 54) qui fait office de poignée pour un utilisateur du chariot.

11. Chariot selon l'une des revendications 1 à 10, **caractérisé en ce que** la corbeille (12) présente, suivant une vue de côté du chariot, un profil général effilé d'arrière en avant selon lequel, d'une part, le bord inférieur des parois latérales (24, 26) à l'arrière du chariot (B) est situé à une altitude inférieure à celle du bord inférieur (22b) de la paroi avant (22) et, d'autre part, le bord supérieur des parois latérales à l'arrière du chariot (H) est situé à une altitude supérieure à celle du bord supérieur (22a) de la paroi avant.

12. Chariot selon la revendication 11, **caractérisé en ce que** le bord supérieur des parois latérales s'étend de l'arrière à l'avant du chariot en suivant un profil concave orienté vers le haut.

13. Chariot selon l'une des revendications 1 à 12, **caractérisé en ce que** la paroi avant (22) est réalisée dans une matière plastique différente de celle des deux parois latérales (24,26).

14. Chariot selon l'une des revendications 1 à 13, **caractérisé en ce que** la matière plastique dans laquelle est réalisée la paroi avant (22) contient au moins un élastomère permettant à ladite paroi avant d'assurer la fonction de pare-choc élastique.

15. Chariot selon l'une des revendications 1 à 14, **caractérisé en ce que** la matière plastique comporte une charge minérale et/ou organique.

16. Chariot selon l'une des revendications 1 à 15, **caractérisé en ce que** les parois latérales sont rigidifiées chacune au moins à leur bord supérieur par un longeron supérieur et sur leur bandeau arrière par un longeron vertical, chacun de ces longerons comportant au moins une veine réalisée lors de l'injection avec du gaz.

17. Chariot selon l'une des revendications 1 à 16, **caractérisé en ce qu'**il comporte une poignée utilisateur (40) qui est reliée aux deux parois latérales (24, 26), dans leur portion arrière qui est opposée à leur portion avant fixée à la paroi avant (22), par l'intermédiaire de deux pièces fixées chacune de manière démontable respectivement aux portions arrières des deux parois latérales, les deux pièces étant adaptées à un type de poignée utilisateur prédéterminé.

18. Chariot selon l'une des revendications 1 à 17, **caractérisé en ce que** le chariot est conçu pour que le volume de la corbeille puisse être modifié par passage d'un premier volume à un second volume en remplaçant le fond (20) et la paroi avant (22) de la corbeille adaptés au premier volume par un fond et une paroi avant adaptés au second volume de corbeille.

19. Chariot selon l'une des revendications 1 à 18, **caractérisé en ce que** les parois latérales (24, 26) et la paroi avant (22) comprennent chacune une zone périphérique formée par des longerons et une zone centrale ajourée formée par des barreaux entrecroisés, la zone centrale comprenant plusieurs sous-zones qui sont réparties en deux types, dans un premier type de sous-zones les barreaux étant moins espacés les uns des autres que dans un deuxième type de sous-zones afin de conférer une plus grande rigidité tout en offrant de l'extérieur de la corbeille une visibilité à travers la paroi, dans le deuxième type de sous-zones les barreaux étant plus espacés les uns des autres afin d'offrir une plus grande visibilité à travers la paroi.

20. Chariot selon l'une des revendications 1 à 19, **caractérisé en ce que** les parois latérales (24, 26) et la paroi avant (22) comportent chacune des longerons dont la face externe est grainée de manière à diminuer l'impact visuel d'éventuelles rayures sur ladite face externe.

## Patentansprüche

1. Wagen (10), umfassend:
- einen Korb (12) zur Aufnahme von Waren, welche einen Boden (20), zwei einander gegenüberliegende Seitenwände (24, 26) und eine Stirnwand (22),
- einen Sockel (14), auf dem der Korb montiert ist, wobei der Sockel mit Rollen (16a - d) zur Verschiebung des Wagens ausgestattet ist,
**dadurch gekennzeichnet, dass** der Boden (20) des Korbs aus Metallgitter besteht und dass die beiden Seitenwände (24, 26) sowie die Stirnwand (22) aus Kunststoff bestehen, wobei die Seitenwände (24, 26) derart konfiguriert sind, dass sie lösbar mit der Stirnwand (22) zusammengestellt werden können und eine auf dem Boden (20) des Korbs (12) abnehmbar befestigte Baugruppe bilden.

2. Wagen nach Anspruch 1, **dadurch gekennzeichnet, dass** die Stirnwand (22) nach außen gewölbt ist, um eine Stoßdämpfungsfunktion zu gewährleisten.

3. Wagen nach Anspruch 2, **dadurch gekennzeichnet, dass** die Stirnwand (22) eine doppelte Krümmung, d.h. eine horizontale und eine vertikale Krümmung, aufweist.

4. Wagen nach einem der Ansprüche 1 - 3, **dadurch gekennzeichnet, dass** die beiden Seitenwände (24, 26) und die Stirnwand (22) jeweils im Unterteil eine nach unten gerichtete, umgekehrt U-förmige freie Umfangskante (22b) aufweisen, wobei die freie Kante die nach oben geklappte freie Umfangskante (21) des Metallgitterbodens überdeckt.

5. Wagen nach Anspruch 4, **dadurch gekennzeichnet, dass** die umgekehrt U-förmige freie untere Umfangskante der Stirnwand (22) einen Innenraum (E) definiert, der der Stirnwand eine Stoßdämpfungsfunktion verleiht.

6. Wagen nach Anspruch 4 oder 5, dadurch gekennzeiczhnet, dass er Mittel zur Befestigung der Wände (22, 24, 26) auf dem Metallgitterboden (20) umfasst, wobei die Befestigungsmittel im durch die umgekehrte U-Form der Unterkante der Wände definierten Innenraum (E) angeordnet sind.

7. Wagen nach Anspruch 6, **dadurch gekennzeichnet, dass** die Befestigungsmittel umfassen:
- Flansche (23), die auf der nach oben geklappten freien Umfangskante (21) des Gitterbodens befestigt sind,
- Schrauben (25), die jeweils die Flansche durchqueren, um anschließend in den Wänden befestigt zu werden, wodurch die Spannkraft der Kunststoffwände auf dem Metallgitterboden eingestellt werden kann.

8. Wagen nach einem der Ansprüche 1 - 7, **dadurch gekennzeichnet, dass** die beiden Seitenwände (24, 26) jeweils durch Ineinandergreifen auf der Stirnwand (22) befestigt sind.

9. Wagen nach einem der Ansprüche 1 - 8, **dadurch gekennzeichnet, dass** die Stirnwand (22) auf jeder ihrer beiden entgegengesetzten Seiten einen Rücklauf zum Hinterteil des Wagens aufweist, wobei jeder Rücklauf mit der entsprechenden Seitenwand ausgerichtet ist.

10. Wagen nach einem der Ansprüche 1 - 9, **dadurch gekennzeichnet, dass** mindestens eine der Seiten- und Stirnwände in deren Oberkante eine Öffnung (50, 52, 54) aufweist, die als Griff für einen Benutzer des Wagens fungiert.

11. Wagen nach einem der Ansprüche 1 -10, **dadurch gekennzeichnet, dass** der Korb (12), von der Seite des Wagens her gesehen, ein allgemein von vorn nach hinten abgeschrägtes Profil aufweist, wonach einerseits die Unterkante der Seitenwände (24, 26) im Hinterteil des Wagens (B) tiefer angeordnet ist als die Unterkante (22b) der Stirnwand (22), und andererseits die Oberkante der Seitenwände (24, 26) im Hinterteil des Wagens (H) höher angeordnet ist als die Oberkante (22a) der Stirnwand.

12. Wagen nach Anspruch 11, **dadurch gekennzeichnet, dass** sich die Oberkante der Seitenwände mit nach oben gerichtetem konkavem Profil vom Hinter- zum Vorderteil des Wagens erstreckt.

13. Wagen nach einem der Ansprüche 1 - 12, **dadurch gekennzeichnet, dass** die Stirnwand (22) aus einem anderen Kunststoff besteht als die beiden Seitenwände (24, 26).

14. Wagen nach einem der Ansprüche 1 - 13, **dadurch gekennzeichnet, dass** der Kunststoff, aus dem die Stirnwand (22) besteht, mindestens ein Elastomer enthält, wodurch sie als elastischer Stoßdämpfer fungieren kann.

15. Wagen nach einem Ansprüche 1 - 14, **dadurch gekennzeichnet, dass** der Kunststoff einen mineralen und/oder organischen Füllstoff enthält.

16. Wagen nach einem der Ansprüche 1 - 15, **dadurch gekennzeichnet, dass** die Seitenwände jeweils mindestens an der Oberkante durch einen oberen Stringer und am Heckbalken durch einen vertikalen Stringer verstift sind, wobei jeder der Stringer mindestens einen mit Gas injizierten Bereich umfasst.

17. Wagen nach einem der Ansprüche 1 - 16, **dadurch gekennzeichnet, dass** er einen Benutzergriff (40) umfasst, der über zwei jeweils abnehmbar auf den Hinterteilen der beiden Seitenwände befestigte Teile mit den beiden Seitenwänden (24, 26) in deren dem an der Stirnwand (22) befestigten Vorderteil entgegengesetzten Hinterteil verbunden sind, wobei die beiden Teile einer bestimmten Griffart angepasst sind.

18. Wagen nach einem der Ansprüche 1 - 17, **dadurch gekennzeichnet, dass** der Wagen darauf ausgelegt ist, dass das Korbvolumen durch einen Übergang von einem ersten zu einem zweiten Volumen geändert werden kann, indem der Boden (20) und die Stirnwand (22), die für das erste Volumen geeignet sind, durch einen Boden und eine Stirnwand, die für das zweite Volumen geeignet sind, ersetzt werden können.

19. Wagen nach einem der Ansprüche 1 - 18, **dadurch gekennzeichnet, dass** die Seitenwände (24, 26) und die Stirnwand (22) jeweils einen durch Stringer ausgebildeten Umfangsbereich sowie einen durch sich kreuzende Stäbe ausgebildeten, gelochten zentralen Bereich umfassen, wobei der zentrale Bereich mehrere Teilbereiche umfasst, die in zwei Typen geteilt sind, wobei in einem Teilbereich eines ersten Typs die Stäbe weniger weit voneinander beabstandet sind als in einem Teilbereich eines zweiten Typs, um eine bessere Versteifung zu gewährleisten und das Korbinnere von der Außenseite des Korbs über die Wand einsehbar zu machen, wobei in einem Teilbereich eines zweiten Typs die Stäbe weiter voneinander beabstandet sind, um eine bessere Durchsichtigkeit der Wand zu gewährleisten.

20. Wagen nach einem der Ansprüche 1 - 19, **dadurch gekennzeichnet, dass** die Seitenwände (24, 26) und die Stirnwand (22) jeweils Stringer umfassen, deren Außenfläche gekörnt ist, um die visuelle Wirkung etwaiger Kratzer an der Außenfläche zu verringern.

## Claims

1. A shopping cart (10) comprising:
- a basket (12) intended to receive goods and which comprises a bottom (20), two side walls (24, 26) opposite one another and a front wall (22),
- a base (14) on which the basket is mounted, said base being equipped with casters (16a-d) for moving the shopping cart,
**characterized in that** the bottom (20) of the basket is made of a wire mesh and the two side walls (24, 26) and the front wall (22) are made of plastic, the side walls (24, 26) being configured to be assembled removably to the front wall (22) and to form an assembly fixed removably on the bottom (20) of the basket (12).

2. The shopping cart according to claim 1, **characterized in that** the front wall (22) is curved toward the outside, thus acting as a bumper.

3. The shopping cart according to claim 2, **characterized in that** the front wall (22) has a double curvature, that is to say, a horizontal curvature and a vertical curvature.

4. The shopping cart according to one of claims 1 to 3, **characterized in that** the two side walls (24, 26) and the front wall (22) each include, in their lower portion, a peripheral free edge (22b) in the shape of an inverted U oriented downward, said free edge covering the peripheral free edge (21) of the wire mesh bottom bent upward.

5. The shopping cart according to claim 4, **characterized in that** the lower peripheral free edge in the shape of an inverted U of the front wall (22) defines an inner space (E) that gives the front wall a shock absorber function.

6. The shopping cart according to claim 4 or 5, **characterized in that** it includes fixing means for fixing the walls (22, 24, 26) to the wire mesh bottom (20), said fixing means being arranged in the inner space (E) defined by the inverted U shape of the lower edge of the walls.

7. The shopping cart according to claim 6, **characterized in that** the fixing means comprise:
- flanges (23) fixed to the peripheral free edge (21) of the mesh bottom bent upward,
- screws (25) respectively passing through said flanges before being fixed in the walls, thus allowing the clamping force of the plastic walls on the wire mesh bottom to be adjusted.

8. The shopping cart according to one of claims 1 to 7, **characterized in that** the two side walls (24, 26) are each fixed to the front wall (22) by interlocking.

9. The shopping cart according to one of claims 1 to 8, **characterized in that** the front wall (22) has, on each of its two opposite sides, a return toward the rear of the shopping cart, each return being aligned with the corresponding side wall.

10. The shopping cart according to one of claims 1 to 9, **characterized in that** at least one of the side and front walls has, in its upper edge, an opening (50, 52, 54) that serves as a handle for a user of the shopping cart.

11. The shopping cart according to one of claims 1 to 10, **characterized in that** the basket (12) has, in a side view of the shopping cart, a tapered general profile from back to front according to which, on the one hand, the lower edge of the side walls (24, 26) at the rear of the shopping cart (B) is situated at a lower altitude than that of the lower edge (22b) of the front wall (22) and, on the other hand, the upper edge of the side walls at the rear of the shopping cart (H) is situated at a higher altitude than that of the upper edge (22a) of the front wall.

12. The shopping cart according to claim 11, **characterized in that** the upper edge of the side walls extends from the back to the front of the shopping cart along a concave profile oriented upward.

13. The shopping cart according to one of claims 1 to 12, **characterized in that** the front wall (22) is made from a different plastic material than that of the two side walls (24, 26).

14. The shopping cart according to one of claims 1 to 13, **characterized in that** the plastic material from which the front wall (22) is made contains at least one elastomer allowing said front wall to serve as an elastic bumper.

15. The shopping cart according to one of claims 1 to 14, **characterized in that** the plastic material includes a mineral and/or organic filler.

16. The shopping cart according to one of claims 1 to 15, **characterized in that** the side walls are each stiffened at least at their upper edge by an upper beam and on their rear strip by a vertical beam, each of these beams including at least one vein made during injection with gas.

17. The shopping cart according to one of claims 1 to 16, **characterized in that** it includes a user handle (40) that is connected to the two side walls (24, 26), in their rear portion that is opposite their front portion fixed to the front wall (22), by means of two parts each fixed detachably, respectively, to the rear portions of the two side walls, the two parts being adapted to a predetermined type of user handle.

18. The shopping cart according to one of claims 1 to 17, **characterized in that** the shopping cart is designed so that the volume of the basket can be modified by going from a first volume to a second volume by replacing the bottom (20) and the front wall (22) of the basket adapted to the first volume with a bottom and a front wall adapted to the second basket volume.

19. The shopping cart according to one of claims 1 to 18, **characterized in that** the side walls (24, 26) and the front wall (22) each comprise a peripheral zone formed by beams and a perforated central zone formed by intersecting bars, the central zone comprising several subzones that are distributed into two types, in a first type of subzones the bars being less spaced apart from one another than in a second type of subzones so as to impart greater rigidity while offering visibility through the wall from the outside of the basket, in the second type of subzones the bars being spaced further apart from one another so as to offer greater visibility through the wall.

20. The shopping cart according to one of claims 1 to 19, **characterized in that** the side walls (24, 26) and the front wall (22) each include beams whose outer face is grained so as to decrease the visual impact of any scratches on said outer face.
